# EUROPÄISCHE PATENTSCHRIFT

(11) **EP 2 502 302 B1**
(45) Veröffentlichungstag und Bekanntmachung des Hinweises auf die Patenterteilung: **19.03.2014**
(21) Anmeldenummer: 10778876.2
(22) Anmeldetag: 11.11.2010
(51) Int. Cl.: H01M 10/04, H02J 7/34, H02J 7/00, H02J 7/02, H02J 3/32

(54) **BATTERIEPRODUKTIONSEINRICHTUNG**
BATTERY PRODUCTION DEVICE
DISPOSITIF DE PRODUCTION DE BATTERIES

(30) Priorität: 20.11.2009 DE 102009054078
(43) Veröffentlichungstag der Anmeldung: 26.09.2012
(73) Patentinhaber: Li-Tec Battery GmbH, 01917 Kamenz (DE)
(72) Erfinder: SCHÄFER, Tim, 99768 Harztor (DE); GUTSCH, Andreas, 59348 Luedinghausen (DE)
(74) Vertreter: Tostmann, Holger Carl
(86) Internationale Anmeldenummer: PCT/EP2010/006878
(87) Internationale Veröffentlichungsnummer: WO 2011/060902

(56) Entgegenhaltungen:
- DE-A1- 1 671 821
- DE-A1- 3 736 069
- US-A- 3 929 505

## Beschreibung

Die vorliegende Erfindung betrifft eine Batterieproduktionseinrichtung, insbesondere eine Formierungseinrichtung zur Formierung von Elektrochemischen Zellen.

Regenerative Energien, wie beispielsweise die Windenergie oder die Solarenergie, weisen den Nachteil der schwankenden Leistungsabgabe auf. Bei entsprechenden Witterungsbedingungen können Windkraftanlagen oder Solarstromanlagen eine hohe Leistung abgeben, während bei entsprechender Änderung der Witterungslage die Leistungsabgabe innerhalb kurzer Zeit auf einen sehr geringen Wert absinken kann. Derartige Schwankungen im Leistungsangebot eines Stromnetzes können insbesondere bei großen Verbrauchern von elektrischer Energie zu Engpässen in der Energieversorgung führen. Ferner können Versorgungsengpässe zu einem temporären Anstieg der Kosten des Energiebezuges führen. Batterieproduktionseinrichtungen, die beispielsweise auch elektrische Energie zum Laden von Batterien benötigen, müssen an das schwankende Leistungsangebot angepasst sein.

Die DE 1 671 821 offenbart eine Anordnung zum Formieren von Akkumulatoren. Im Akkumulator enthaltene Energie kann ohne weitere Zusatzstromquellen verlustfrei in das Wechselstromnetz zurückgeführt werden.

Es ist Aufgabe der vorliegenden Erfindung eine verbesserte Batterieproduktionseinrichtung bereitzustellen.

Diese Aufgabe wird gelöst durch eine Batterieproduktionseinrichtung, insbesondere eine Formierungseinrichtung zur Formierung von Elektrochemischen Zellen, umfassend eine Produktionseinheit, insbesondere eine Aufnahmeeinrichtung zur Aufnahme zumindest einer Elektrochemischen Zelle, insbesondere zur Aufnahme mehrerer Elektrochemischen Zellen, eine Stromnetzanbindungseinrichtung, durch die die Batterieproduktionseinrichtung elektrische Energie von einem Stromnetz, insbesondere einem öffentlichen Stromnetz, beziehen kann und elektrische Energie an das Stromnetz abgeben kann. Es ist eine Regelungseinrichtung von der Batterieproduktionseinrichtung umfasst, die zur Regelung von zumindest Teilen der Batterieproduktion dient. Die Regelungseinrichtung ist derart ausgebildet, dass die vom Stromnetz bezogene Energie und/oder die an das Stromnetz abgegebene Energie in Abhängigkeit des Leistungsangebotes im Stromnetz geregelt werden kann. Unter dem Leistungsangebot ist insbesondere das temporäre Leistungsangebot gemeint.

Unter einer Batterieproduktionseinrichtung kann im Sinne der vorliegenden Erfindung jegliche Einrichtung verstanden werden, die im Rahmen der Produktion von Elektrochemischen Zellen oder Batterieanordnungen, enthaltend zumindest eine Elektrochemische Zelle, Verwendung finden kann. Die Produktion einer Elektrochemischen Zelle oder eine Batterieanordnung enthaltend zumindest eine Elektrochemische Zelle bezieht sich dabei auf den Prozess der Übertragung von natürlichen oder vorproduzierten Ausgangsstoffen, gegebenenfalls unter Einsatz von Energie und weiteren Arbeitsmitteln, bis hin zur Fertigstellung der Elektrochemischen Zellen oder der Batterieanordnung enthaltend zumindest eine Elektrochemische Zelle als fertiges Produkt, welches bestimmungsgemäß angewendet verwendet werden kann. Ein unmittelbarer Produktionsprozess findet in der Produktionseinheit statt. Die übrigen Einrichtungen, wie z.B. die Regelungseinrichtung oder die Stromnetzanbindungseinrichtung sind nicht unmittelbar an dem Prozess der Produktion beteiligt. Ein wesentlicher Bestandteil der Batterieproduktion kann die Formierung von Elektrochemischen Zelle angesehen werden. Die Formierung kann zur Erzeugung spezieller Oberflächenschichten an den Elektroden der Elektrochemischen Zellen dienen, wobei wesentliche mechanische Veränderungen an der Elektrochemischen Zelle nicht zwangsläufig vorzunehmen sind. Die Formierung Elektrochemischer Zellen kann mehrfaches Laden und Entladen der Elektrochemischen Zellen umfassen. Die Aufnahmeeinrichtung für zu formierende Elektrochemische Zellen stellt dabei eine mögliche Produktionseinheit dar.

Im Sinne der Erfindung ist unter einer Elektrochemischen Zelle eine Einrichtung zu verstehen, welche auch zur Speicherung chemischer Energie und zur Abgabe elektrischer Energie dient. Dazu kann die erfindungsgemäße Elektrochemische Zelle wenigstens über einen Elektrodenstapel oder einen Elektrodenwickel verfügen, der mittels einer Umhüllung gegenüber der Umhüllung weitgehend gas- und flüssigkeitsdicht abgegrenzt ist. Auch kann die Elektrochemische Zelle ausgestaltet sein, elektrische Energie beim Laden aufzunehmen. Man spricht dann auch von einer Sekundärzelle oder einem Akkumulator.

Dadurch, dass die Regelungseinrichtung die bezogene bzw. die abgegebene elektrische Energie in Abhängigkeit des Leistungsangebotes regeln kann, kann die Batterieproduktionseinrichtung auf Schwankungen des Leistungsangebots eingestellt werden. Dabei kann vorgesehen sein, dass bei einem erhöhten Leistungsangebot mehr elektrische Leistung bezogen wird als bei einem geringen Leistungsangebot. Ferner kann vorgesehen sein, dass bei einem hohen Leistungsangebot weniger Leistung in das Stromnetz abgegeben wird bzw. bei einem geringen Leistungsangebot mehr elektrische Leistung an das Stromnetz abgegeben wird. Ein hohes Leistungsangebot kann bei Netzunterlast, ein geringes Leistungsangebot kann bei Netzüberlast vorhanden sein.

Beim Prozess der Formierung von Elektrochemischen Zellen wird zwar elektrische Energie von einer Energiequelle, insbesondere einem Stromnetz oder einer Energiespeichereinrichtung, bezogen. Ein Großteil dieser Energie wird zum Laden der Elektrochemischen Zellen benötigt. Diese Energie wird, mit Ausnahme von Verlusten jeglicher Art, folglich nicht verbraucht, sondern lediglich in chemische Energie umgewandelt. Zu einem anderen Zeitpunkt wird die zu formierende Elektrochemische Zelle wieder entladen, so dass elektrische Energie zur Verfügung gestellt wird. Aufgrund der Vielzahl von großtechnisch zu formierenden Elektrochemischen Zellen kann eine Regelung der Batterieproduktionseinrichtung hinsichtlich der bezogenen oder abzugebenden Leistung einen Beitrag zur Stabilisierung von Stromnetzen erbringen. Darüber hinaus können Kostenvorteile aus der Nutzung von günstigen Strombeschaffungskosten bei Netzunterlast bzw. hohen Vergütungsbeträgen für Leistung, die bei Netzüberlast in das Stromnetz eingespeist wird, entstehen.

Vorzugsweise weist die Batterieproduktionseinrichtung eine Energiespeichereinrichtung auf. Unter einer Energiespeichereinrichtung kann dabei jegliche Einrichtung verstanden werden, welche Energie insbesondere zum Zwecke der späteren Nutzung oder sonstigen Abgabe speichern kann. Eine Energiespeichereinrichtung kann die elektrische Energie in andere Energieformen, wie beispielsweise mechanische und/oder chemische Energie umwandeln. Eine Rückumwandlung der Energie in elektrische Energie ist vorzugsweise vorgesehen. Die Energiespeichereinrichtung kann vorzugsweise eine Anzahl von Elektrochemischen Zellen, insbesondere Sekundärzellen, umfassen.

Durch das Vorsehen einer Energiespeichereinrichtung können Teile der Batterieproduktionseinrichtung, welche elektrische Energie benötigen, insbesondere die Produktionseinheit, unabhängig von dem Leistungsangebot im Stromnetz, zumindest zeitweise mit ausreichender Leistung versorgt werden, indem ersatzweise Leistung durch die Energiespeichereinrichtung zur Verfügung gestellt werden kann. Ebenso kann die Produktionseinheit in gewissen Betriebszuständen elektrische Energie unabhängig vom Leistungsangebot im Stromnetz abgeben, da die Produktionseinheit elektrische Energie auch an die Energiespeichereinrichtung abgeben kann. Die Batterieproduktionseinrichtung kann dabei vermehrt Leistung vom Stromnetz beziehen, wenn das temporäre Leistungsangebot günstig für einen Strombezug ist, und dabei die Leistung auch in die Energiespeichereinrichtung leiten, wenn zu diesem Zeitpunkt eine Nachfrage von Leistung von der Produktionseinheit nicht oder nur in geringem Umfang vorhanden ist. Die in der Energiespeichereinrichtung gespeicherte Energie kann zu einem beliebigen Zeitpunkt an die Produktionseinheit verwendet werden. Alternativ kann die in der Energiespeichereinrichtung gespeicherte Energie zu einem beliebigen Zeitpunkt an das Stromnetz abgegeben werden. Eine oder mehrere Elektrochemischen Zellen können Bestandteile der Energiespeichereinrichtung sein.

Bevorzugt ist die Energiespeichereinrichtung und die Produktionseinheit durch eine gemeinsame Einrichtung gebildet. Dabei kann insbesondere vorgesehen sein, dass die Energiespeichereinrichtung bzw. die Produktionseinheit jeweils aus gleichartigen Komponenten gebildet ist. Alternativ oder in Kombination hierzu kann vorgesehen sein, dass je nach Betriebszustand eine Komponente der Batterieproduktionseinrichtung entweder der Energiespeichereinrichtung oder der Produktionseinheit zugeordnet sein kann. In einem anderen Betriebszustand kann diese Komponente dann der jeweils anderen, nämlich der Produktionseinheit oder der Energiespeichereinrichtung zugeordnet sein. Dies trifft insbesondere auf eine Aufnahmeeinrichtung für Elektrochemische Zellen zu, an der in einem Betriebszustand zu formierende Elektrochemische Zellen angebracht werden können. In einem der Formierung der Elektrochemischen Zellen zeitlich nachgelagerten Betriebszustand kann die im vorigen Betriebszustand formierte Elektrochemische Zelle weiterhin in der Aufnahmeeinrichtung verbleiben, obwohl der Prozess der Formierung bereits abgeschlossen ist. In diesem Betriebszustand kann die Elektrochemische Zelle zur Energiespeicherung beitragen. Die Aufnahmeeinrichtung, an welche die zur Energiespeicherung angeordnete Elektrochemische Zelle nun angebracht ist, übernimmt folglich in diesem Betriebszustand die Funktion der Energiespeichereinrichtung, ggf. im Zusammenspiel mit der Elektrochemischen Zelle. Insofern kann zwischen der Energiespeichereinrichtung und der Produktionseinheit nur mittels einer Betrachtung der momentanen Funktion im Rahmen der Batterieproduktionseinrichtung unterscheiden werden.

Vorzugsweise umfasst die Batterieproduktionseinrichtung einen Netzauslastungssensor, der insbesondere eine Netzüberlast und/oder eine Netzunterlast des Stromnetzes erkennen kann. Anhand der ermittelten Netzüberlast und/oder Netzunterlast können Rückschlüsse auf das Leistungsangebot im Stromnetz gezogen werden. Ein Netzauslastungssensor kann beispielsweise die Netzfrequenz des Stromnetzes ermitteln. Ein Netzauslastungssensor kann als Softwaremodul implementiert sein und/oder als Komponente der Regelungseinrichtung ausgebildet sein. Bei einem Überangebot von elektrischer Leistung kann es zu einer Steigerung der Netzfrequenz kommen; bei einem Unterangebot kann es zu einer Verringerung der Netzfrequenz kommen. Ein Netzauslastungssensor kann alternativ auch eine Datenverarbeitungseinheit sein, welche vorzugsweise aufbereitete Netzauslastungsdaten, welche von extern über eine Kommunikationsleitung an die Batterieproduktionseinrichtung übermittelt werden können, auswerten kann und Rückschlüsse auf die Netzauslastung ermöglichen kann. Derartige Netzauslastungsdaten können auch Werte über momentane und/oder künftige Beschaffungskosten von elektrischer Energie umfassen.

Die der Erfindung zugrundeliegende Aufgabe wird ferner gelöst durch ein Verfahren zur Regelung einer Batterieproduktionseinrichtung, insbesondere einer Formierungseinrichtung zur Formierung von Elektrochemischen Zellen, umfassend eine Produktionseinheit, insbesondere eine Aufnahmeeinrichtung zur Aufnahme zumindest einer Elektrochemischen Zelle, insbesondere mehrerer Elektrochemischer Zellen, eine Stromnetzanbindungseinrichtung, mittels derer die Batterieproduktionseinrichtung elektrische Energie von einem Stromnetz beziehen kann und elektrische Energie in das Stromnetz abgeben kann, eine Regelungseinrichtung zur Regelung von zumindest Teilen der Batterieproduktion. Dabei wird ein Angebot an elektrischer Leistung, nämlich das Leistungsangebot, im Stromnetz erfasst und anhand des erfassten Leistungsangebotes der Umfang von Energie festgelegt, der vom Stromnetz bezogen und/oder der an das Stromnetz abgegeben wird.

Das Leistungsangebot im Stromnetz kann mit einem Netzauslastungssensor ermittelt werden. Der Umfang der zu beziehenden und/oder abzugebenen Energie kann durch weitere Parameter beeinflusst sein. Es ergeben sich die bereits zur Batterieproduktionseinrichtung genannten Vorteile.

Vorzugsweise wird das Leistungsangebot im Stromnetz anhand von Messungen der Netzfrequenz ermittelt. Vorzugsweise wird dabei das temporäre, also das im Zeitpunkt der Messung der Netzfrequenz vorhandene Leistungsangebot, ermittelt. Alternativ oder in Kombination hierzu kann das Leistungsangebot im Stromnetz statistisch ermittelt werden. Hierbei kann ein temporäres Leistungsangebot ermittelt werden. Alternativ oder in Kombination hierzu kann auch ein Leistungsangebot zu einem beliebigen, insbesondere einem Zeitpunkt in der Zukunft ermittelt werden. Hierzu kann beispielsweise ein Leistungsangebot bei vergleichbaren Rahmenbedingungen zu früheren Zeitpunkten herangezogen werden, unter weiterer Berücksichtigung von gegebenenfalls abweichenden Rahmenbedingungen.

Vorzugsweise wird bei Netzüberlast mehr elektrische Energie aus dem Stromnetz entnommen als bei Netzunterlast. Für diesen Vergleich sind jeweils nahezu identische Betriebszustände der Batterieproduktionseinrichtung zu heranzuziehen, die sich nur durch das Vorhandensein von Netzüberlast bzw. Netzunterlast voneinander unterscheiden. Innerhalb der Regelung kann dabei eine Funktion implementiert sein, die bewirkt, dass Teile der Batterieproduktionseinrichtung im Falle der Netzunterlast mehr Energie von einer Energiespeichereinrichtung beziehen als das im Falle von Netzüberlast der Fall wäre. Alternativ oder in Kombination kann innerhalb der Regelung eine Funktion implementiert sein, die bewirkt, dass im Falle der Netzüberlast Teilen der Batterieproduktionseinrichtung weniger Energie zur Verfügung gestellt wird bzw. dass Teile der Batterieproduktionseinrichtung weniger Leistung nachfragen, als dies bei Netzunterlast der Fall wäre.

Die Begriffe Netzunterlast und Netzüberlast sind als relative Begriffe zu verstehen und beziehen sich vorzugsweise auf zwei Zustände des Stromnetzes, wobei im Falle der Netzüberlast das Leistungsangebot des Stromnetzes niedriger bzw. im Falle der Netzunterlast das Leistungsangebot des Stromnetzes größer als im jeweils anderen Zustand ist. Dies umfasst natürlich auch die Zustände der absoluten Netzüberlast bzw. absoluten Netzunterlast, bei der die Gesamtheit der in einem Stromnetz nachgefragten Leistung größer bzw. kleiner als die Gesamtheit der im Stromnetz zur Verfügung gestellten Leistung ist.

Vorzugsweise wird bei Netzunterlast mehr Leistung aus dem Stromnetz entnommen als bei Netzüberlast, insbesondere bei ansonsten gleichbleibenden Bedingungen. Die entnommene Leistung wird vorzugsweise der Produktionseinheit und/oder einer Energiespeichereinrichtung zugeführt. Insofern kann auf ein mögliches Überangebot an Leistung im Stromnetz durch erhöhte Leistungsaufnahme reagiert werden, wodurch die Produktionseinheit mit mehr Leistung versorgt werden kann. Alternativ oder in Kombination kann die Energiespeichereinrichtung mit mehr Leistung versorgt werden, die dann für die Produktionseinrichtung zur Verfügung gestellt werden kann, wenn das Leistungsangebot im Stromnetz zu einem anderen Zeitpunkt geringer ist.

Bei Netzüberlast kann mehr Leistung, insbesondere für die Produktionseinheit, aus einer Energiespeichereinrichtung entnommen werden, als dies bei Netzunterlast der Fall ist, insbesondere bei ansonsten gleichbleibenden Bedingungen. Hierdurch kann eine reduzierte Leistungsabgabe des Stromnetzes durch die Energiespeichereinrichtung ersetzt werden. Vorzugsweise wird bei Netzüberlast mehr Leistung, insbesondere von der Produktionseinheit und/oder von einer Energiespeichereinrichtung, in das Stromnetz eingeleitet als bei Netzunterlast, insbesondere bei ansonsten gleichbleibenden Bedingungen. Insbesondere wenn die Produktionseinheit den Prozess des Formierens bearbeitet, kann es vorkommen, dass Energie, welche in zu bearbeitenden Elektrochemischen Zellen gespeichert ist, aus diesen entnommen wird. Diese kann entweder in eine Energiespeichereinrichtung oder in das Stromnetz eingeleitet werden. Es bietet sich dabei an, im Falle von Netzüberlast mehr Energie in das Stromnetz einzuleiten. Bei Netzunterlast hingegen kann mehr Leistung, insbesondere vom Stromnetz und/oder von der Produktionseinheit in die Energiespeichereinrichtung eingeleitet werden als bei Netzüberlast, insbesondere bei ansonsten gleichbleibenden Bedingungen. Falls also ein größeres Leistungsangebot zur Verfügung steht, kann somit die Energiespeichereinrichtung aufgeladen werden. Alternativ oder in Kombination dazu kann die von der Produktionseinheit abgegebene elektrische Leistung vermehrt in die Energiespeichereinrichtung eingeleitet werden, als dies bei Netzüberlast der Fall wäre.

Vorzugsweise wird eine Elektrochemische Zelle, welche in einem Betriebszustand in der Produktionsarbeit bearbeitet wird, in einem zeitlich dem Betriebszustand nachfolgenden Betriebszustand als Elektrochemische Zelle eine Energiespeichereinrichtung eingesetzt. Insbesondere wenn die Produktionseinheit zur Formierung von Elektrochemischen Zellen verwendet wird, können die Elektrochemischen Zellen nach der Formierung noch über eine gewisse Zeit in der Batterieproduktionseinrichtung verbleiben und dabei ggf. in einem geladenen oder zumindest teilgeladenen Zustand sich befinden. In einem derartigen Betriebszustand kann die Speicherkapazität der Elektrochemischen Zelle zur Speicherung von elektrischer Energie genutzt werden. Dabei kann die Elektrochemische Zelle von der Aufnahmeeinrichtung, in der die Elektrochemische Zelle während des Produktionsprozesses angebracht war, in eine andere Aufnahmeeinrichtung, insbesondere der Energiespeichereinrichtung örtlich verlagert werden. Alternativ kann die Elektrochemische Zelle jedoch auch in der Aufnahmeeinrichtung verbleiben. In einem derartigen Fall ist die Batterieproduktionseinrichtung derart ausgebildet, dass diese auch als Energiespeichereinrichtung, ggf. im Zusammenspiel mit der darin angebrachten Elektrochemischen Zelle verwendet werden kann.

Weitere Vorteile, Merkmale und Anwendungsmöglichkeiten der vorliegenden Erfindung ergeben sich aus der nachfolgenden Beschreibung in Zusammenhang mit den Figuren. Es zeigt:
- Fig. 1: ein Blockschaltbild einer erfindungsgemäßen Formierungseinrichtung;
- Fig. 2: ein Blockschaltbild einer erfindungsgemäßen Formierungseinrichtung in einer alternativen Ausführungsform;
- Fig. 3: ein Kennfeld einer Regelung für den Strombezug in einer ersten Ausführungsform;
- Fig. 4: ein Kennfeld einer Regelung für die Stromabgabe der ersten Ausführungsform;
- Fig. 5: ein Kennfeld einer Regelung für den Strombezug in einer zweiten Ausführungsform;
- Fig. 6: ein Kennfeld einer Regelung für die Stromabgabe der zweiten Ausführungsform;
- Fig. 7: ein Kennfeld einer Regelung für den Strombezug in einer dritten Ausführungsform;
- Fig. 8: ein Kennfeld einer Regelung für die Stromabgabe der dritten Ausführungsform.

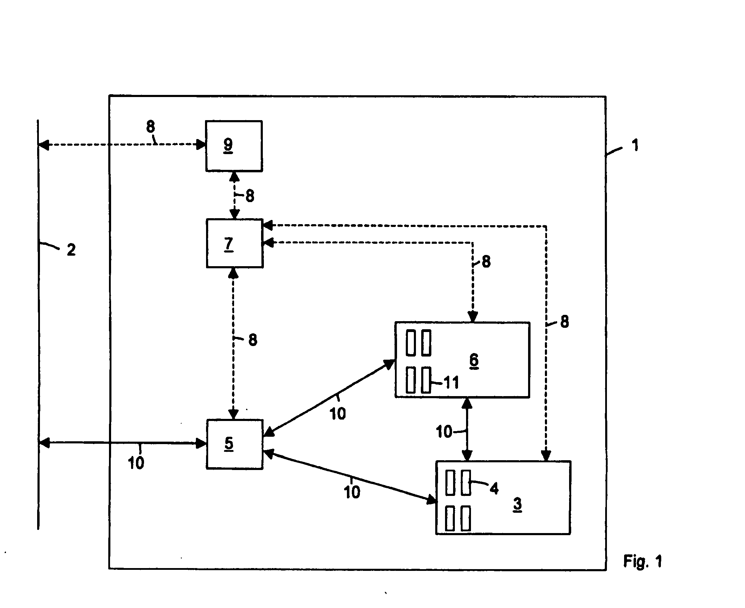

Figur 1 zeigt eine Formierungseinrichtung 1 als Beispiel für eine erfindungsgemäße Batterieproduktionseinrichtung. Die Formierungseinrichtung 1 umfasst eine Aufnahmeeinrichtung 3 für Elektrochemische Zellen 4. Die in der Aufnahmeeinrichtung 3 aufgenommenen Elektrochemischen Zellen 4 sind derartige Zellen, an denen innerhalb der Formierungseinrichtung 1 ein Produktionsprozess vorgenommen wird, der im vorliegenden Fall durch das Formieren gebildet sein kann. Es können alternativ oder in Kombination hierzu auch andere Produktionsprozesse durchgeführt werden.

Die Formierungseinrichtung 1 umfasst ferner eine Stromnetzanbindungseinrichtung 5, welche mit einer bidirektionalen Stromleitung 10 an ein öffentliches Stromnetz 2 angeschlossen ist. Die Stromnetzanbindungseinrichtung 5 ermöglicht zum Einen den Bezug von elektrischer Leistung aus dem Stromnetz 2. Zum Anderen ermöglicht die Stromnetzanbindungseinrichtung 5 eine Abgabe von elektrischer Leistung aus der Formierungseinrichtung 1 in das Stromnetz 2 hinein. Die Stromnetzanbindungseinrichtung 5 ist über eine weitere bidirektionale Stromleitung 10 mit der Aufnahmeeinrichtung 3 verbunden, so dass elektrische Leistung von der Stromnetzanbindungseinrichtung 5 an die Aufnahmeeinrichtung 3 abgegeben werden kann, und elektrische Leistung von der Aufnahmeeinrichtung 3 an die Stromnetzanbindungseinrichtung 5 abgegeben werden kann.

Die Formierungseinrichtung 1 weist ferner eine Energiespeichereinrichtung 6 auf. In der Energiespeichereinrichtung 6 sind eine Anzahl von Elektrochemischen Zellen 11 angeordnet. Die in der Energiespeichereinrichtung 6 angeordneten Elektrochemischen Zellen 11 sind vorzugsweise bereits fertig produzierte Elektrochemische Zellen, an denen momentan innerhalb der Formierungseinrichtung keinerlei Produktionsprozess durchgeführt wird. Vielmehr dienen die Elektrochemischen Zellen 11 in der Energiespeichereinrichtung 6 als Einheiten zur Speicherung von elektrischer Energie. Die Energiespeichereinrichtung 6 ist über bidirektionale Stromleitungen 10 mit der Aufnahmeeinrichtung 3 und der Stromnetzanbindungseinrichtung 5 verbunden.

Die Formierungseinrichtung 1 weist eine Regelungseinrichtung 7 auf. Die Regelungseinrichtung 7 ist über bidirektionale Datenleitungen 10 mit der Stromnetzanbindungseinrichtung 5, der Aufnahmeeinrichtung 3 sowie der Energiespeichereinrichtung 6 verbunden. Die Regelungseinrichtung 7 kann einzelne Vorgänge innerhalb der genannten Einrichtungen 3, 5, 6 steuern und regeln. Insbesondere kann die Regelungseinrichtung 7 den Fluss von elektrischer Leistung innerhalb der Stromleitungen 10 steuern bzw. regeln. Die Regelungseinrichtung 7 ist über eine weitere Datenleitung 8 mit einem Netzauslastungssensor 9 verbunden. Der Netzauslastungssensor 9 ist ausgebildet, eine Netzfrequenz in dem Stromnetz 2 zu ermitteln, so dass Rückschlüsse auf die Netzauslastung innerhalb des Stromnetzes 2 ermittelt werden können. Über eine weitere, nicht dargestellte Datenleitung erhält der Netzauslastungssensor 9 darüber hinaus Daten von dem lokalen Stromnetzanbieter, welcher den Grad der Netzauslastung sowie die momentanen Energiebezugskosten umfassen. Unter Energiebezugskosten sind auch negative Energiebezugskosten zu verstehen, nämlich auch die Vergütung seitens des Stromnetzbetreibers für elektrische Leistung, welche von der Formierungseinrichtung in das Stromnetz eingespeist wird.

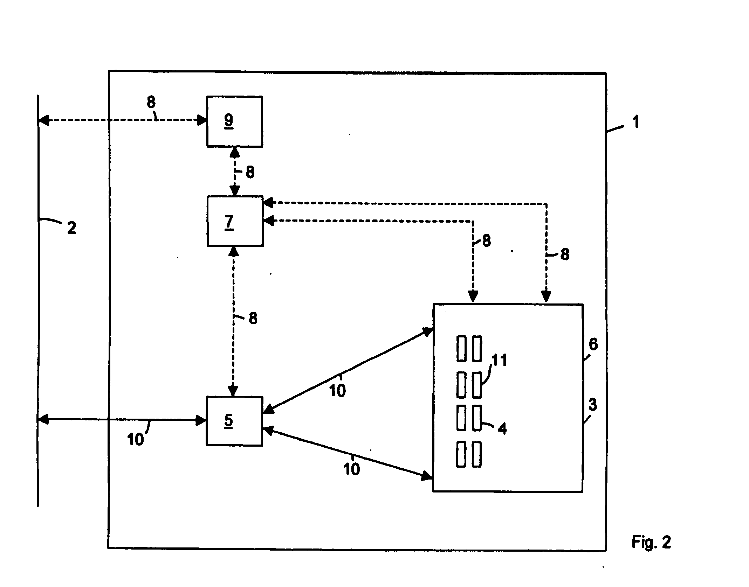

Figur 2 zeigt das Blockschaltbild einer erfindungsgemäßen Formierungseinrichtung 1, die weitgehend der Formierungseinrichtung nach Figur 1 entspricht. Im Folgenden wird nur auf die Unterschiede eingegangen. Es ist zu erkennen, dass die Aufnahmeeinrichtung und die Energiespeichereinrichtung durch eine gemeinsame Einrichtung gebildet sind. Nach der Formierung werden die zu formierenden Elektrochemischen Zellen noch für eine bestimmte Dauer innerhalb der Aufnahmeeinrichtung gelagert. Während dieser Lagerung können die Elektrochemischen Zellen, welche zuvor formiert wurden, geladen sein und somit die Aufgaben der Elektrochemischen Zellen 11 der Energiespeichereinrichtung 6 übernehmen. Insofern sind die Elektrochemischen Zellen 11 der Energiespeichereinrichtung 6 durch die Elektrochemischen Zellen 4 der Aufnahmeeinrichtung 3 gebildet, wenn die Formierung dieser Elektrochemischen Zellen 4 abgeschlossen ist.

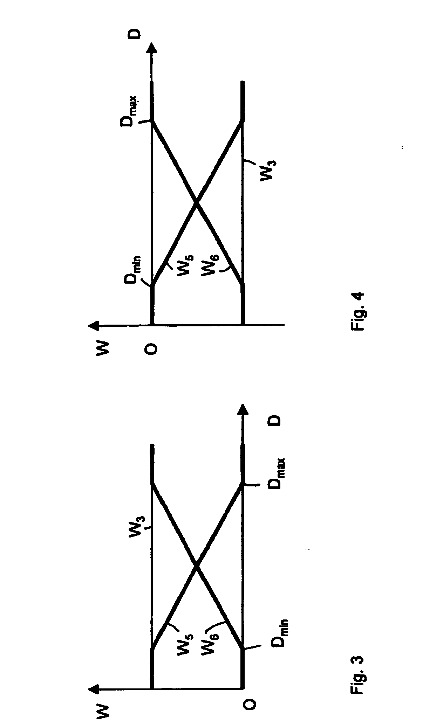

Anhand der ermittelten Netzauslastung regelt die Regelungseinrichtung den Strombezug bzw. die Stromabgabe der einzelnen Einrichtungen, was unter Bezugnahme auf die Figuren 3 bis 8 erläutert wird.

Figur 3 zeigt ein Kennfeld einer Regelung für den Strombezug in einer ersten Ausführungsform. Auf der Abszissenachse ist dabei der Grad der Netzauslastung D aufgetragen. Dₘᵢₙ bezeichnet dabei beispielhaft einen Zustand der Netzunterlast; Dₘₐₓ bezeichnet dabei beispielhaft einen Zustand der Netzüberlast.

Die Ordinatenachse bezeichnet die elektrische Leistung W, welche von einzelnen Einrichtungen nachgefragt oder zur Verfügung gestellt wird. Unabhängig von dem Grad der Netzauslastung D benötigt die Aufnahmeeinrichtung eine konstante elektrische Leistung W₃. Diese elektrische Leistung W₃ kann zum Einen durch die Stromnetzanbindungseinrichtung 5 aus dem Stromnetz 2 bereitgestellt werden, dargestellt durch die mit W₅ bezeichnete Linie. Es ist zu erkennen, dass die Leistung W₅, die vom Stromnetz 2 bezogen wird, größer ist, wenn die Netzauslastung D geringer ist. Ist die Netzauslastung D größer, nimmt die vom Stromnetz 2 bezogene Leistung W₅ ab. Um dennoch die konstante nachgefragte elektrische Leistung W₃ der Aufnahmeeinrichtung 3 zu befriedigen, wird ersatzweise elektrische Leistung W₆ durch die Energiespeichereinrichtung 6 bereitgestellt. Es ist ersichtlich, dass ab einer gewissen Netzüberlast Dₘₐₓ ausschließlich Energie über die Energiespeichereinrichtung 6 bezogen wird. Unterhalb einer gewissen Netzunterlast Dₘᵢₙ hingegen wird Leistung ausschließlich von der Stromnetzanbindungseinrichtung 5 vom Stromnetz 2 entnommen.

Figur 4 zeigt ein Kennfeld einer Regelung für die Stromabgabe der ersten Ausführungsform. Es können beispielsweise die in der Aufnahmeeinrichtung 3 angeordneten Elektrochemischen Zellen 4 entladen werden. Die Leistungskurven befinden sich unterhalb der Abszisse und bezeichnen daher einen Fluss von Leistung in einer Richtung, die dem Fluss von Leistung gemäß der Figur 3 entgegengesetzt ausgerichtet ist.

Es ist ersichtlich, dass die Batterieaufnahmeeinrichtung 3 eine elektrische Leistung W₃ abgeben kann. Im Falle einer Netzunterlast ist eine Abgabe der elektrischen Leistung an das Stromnetz ungünstig, weshalb mehr elektrische Leistung W₆ an die Energiespeichereinrichtung abgegeben wird. Im Falle einer Netzüberlast hingegen wird vermehrt Leistung W₅ an das Stromnetz 2 über die Stromnetzanbindungseinrichtung 5 abgegeben. Es ist auch ersichtlich, dass unterhalb einer bestimmten Netzunterlast Dₘᵢₙ elektrische Leistung ausschließlich an die Energiespeichereinrichtung 6 abgegeben wird, während oberhalb einer gewissen Netzüberlast Dₘₐₓ elektrische Leistung ausschließlich an das Stromnetz 2 über die Stromnetzanbindungseinrichtung 5 abgegeben wird.

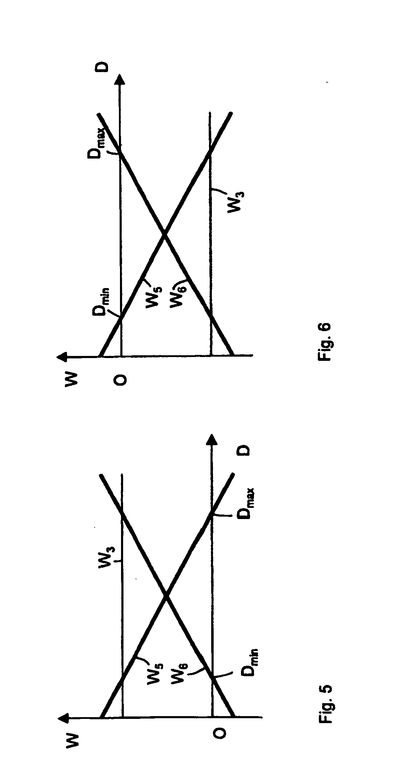

Die Figuren 5 bzw. 6 zeigen Kennfelder einer Regelung für den Strombezug bzw. die Stromabgabe in einer zweiten Ausführungsform. Diese entsprechen weitgehend den Kennfeldern der Figuren 3 und 4, so dass im Folgenden nur auf die Unterschiede eingegangen wird. In Figur 5 ist zu erkennen, dass bei einer Netzunterlast unterhalb einer bestimmten Netzunterlast Dₘᵢₙ mehr elektrische Leistung W₅ über die Stromnetzanbindungseinrichtung 5 von dem Stromnetz 2 bezogen wird, als elektrische Leistung W₃ von der Aufnahmeeinrichtung 3 benötigt wird. Ferner ist zu erkennen, dass unterhalb einer gewissen Netzunterlast Dₘᵢₙ die Leistung W₆, die von der Energiespeichereinrichtung bereitgestellt wird, einen negativen Wert annimmt. Dies resultiert daraus, dass ein Überschussanteil der Leistung W₅, die von der Stromnetzanbindungseinrichtung 5 vom Stromnetz 2 bereitgestellt wird, zum Laden der Energiespeichereinrichtung 6 verwendet wird. Ferner ist zu erkennen, dass oberhalb einer gewissen Netzüberlast Dₘₐₓ die Energiespeichereinrichtung 6 mehr elektrische Leistung W₆ zur Verfügung stellt, als von der Aufnahmeeinrichtung 3 benötigt wird. Ein Überschussanteil der von der Energiespeichereinrichtung 6 bereitgestellten Leistung wird in das Stromnetz 2 eingeleitet, um zur Stabilisierung der Netzauslastung beizutragen. Wie zu erkennen ist, ist der Betrag der vom Stromnetz bezogenen Leistung W₅ negativ, was bedeutet, dass elektrische Leistung an das Stromnetz 2 abgegeben wird.

Figur 6 zeigt dabei den Zustand, bei dem die Aufnahmeeinrichtung elektrische Leistung W₃ abgeben kann. Es ist zu erkennen, dass unterhalb einer gewissen Netzunterlast Dₘᵢₙ die vom Stromnetz bezogene Leistung W₅ einen positiven Wert annimmt. Diese positive Leistung wird an die Energiespeichereinrichtung 6 abgegeben. Es ist zu erkennen, dass die Leistung W₆, die an die Energiespeichereinrichtung 6 abgegeben wird, größer ist als die Leistung W₃, die von der Aufnahmeeinrichtung 3 abgegeben wird. Ferner ist zu erkennen, dass oberhalb einer gewissen Netzüberlast Dₘₐₓ ein Überschuss an elektrischer Leistung W₆ an das Stromnetz 2 abgegeben werden kann, so dass die gesamte an das Stromnetz 2 über die Stromnetzanbindungseinrichtung 5 abgegebene Leistung W₅ größer ist als die von der Aufnahmeeinrichtung 3 bereitgestellte elektrische Leistung W₃.

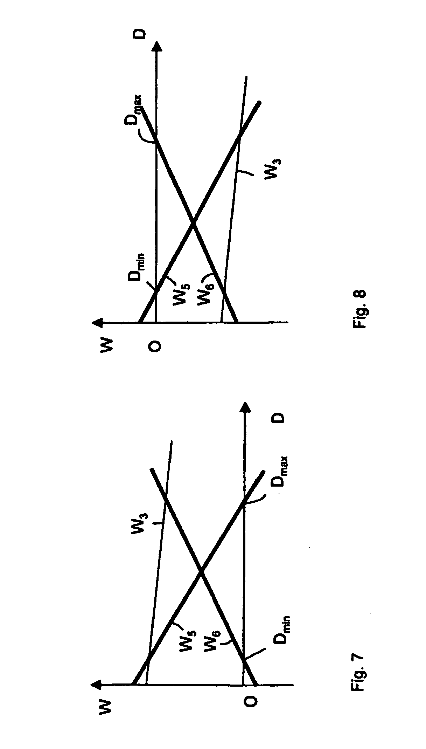

Die Figuren 7 und 8 zeigen Kennfelder einer Regelung für den Strombezug bzw. die Stromabgabe in einer dritten Ausführungsform. Diese entsprechen weitgehend den Kennfeldern der Figuren 5 und 6, so dass im Folgenden nur auf die Unterschiede eingegangen wird. Es ist zu erkennen, dass die von der Aufnahmeeinrichtung 3 benötigte elektrische Leistung W₃ in Abhängigkeit von der Netzauslastung D variiert. So wird von der Regelungseinrichtung die von der Aufnahmeeinrichtung 3 benötigte Leistung W₃ verringert, wenn eine hohe Netzauslastung D vorliegt, wie in Figur 7 dargestellt. Bei einer geringen Netzauslastung wird die von der Aufnahmeeinrichtung 3 benötigte Energie W₃ erhöht. Analog kann, wie in Figur 8 gezeigt, die Regelungseinrichtung derart implementiert sein, dass die Aufnahmeeinrichtung 3 bei Netzüberlast mehr elektrische Leistung W₃ abgibt, als bei Netzunterlast, wie in Figur 8 dargestellt.

### Bezugszeichenliste

- 1: Formierungseinrichtung
- 2: Stromnetz
- 3: Aufnahmeeinrichtung
- 4: Elektrochemische Zelle
- 5: Stromnetzanbindungseinrichtung
- 6: Energiespeichereinrichtung
- 7: Regelungseinrichtung
- 8: Datenleitung
- 9: Netzauslastungssensor
- 10: Stromleitung
- 11: Elektrochemische Zelle

- D: Netzauslastung
- W: Leistung

## Patentansprüche

1. Batterieproduktionseinrichtung, insbesondere Formierungseinrichtung (1) zur Formierung von Elektrochemischen Zellen (4), umfassend eine Produktionseinheit, insbesondere eine Aufnahmeeinrichtung (3) zur Aufnahme zumindest einer Elektrochemischen Zelle (4), insbesondere mehrerer Elektrochemischen Zellen (4),
eine Stromnetzanbindungseinrichtung (5), mittels derer die Batterieproduktionseinrichtung elektrische Energie von einem Stromnetz (2), insbesondere einem öffentlichen Stromnetz, beziehen kann und elektrische Energie an das Stromnetz abgeben kann,
eine Regelungseinrichtung (7) zur Regelung von zumindest Teilen der Batterieproduktion,
**dadurch gekennzeichnet, dass**
die Regelungseinrichtung (7) derart ausgebildet ist, dass die vom Stromnetz (2) bezogene elektrische Energie und/oder die an das Stromnetz (2) abgegebene elektrische Energie in Abhängigkeit des Leistungsangebotes im Stromnetz geregelt werden kann,
insbesondere in Abhängigkeit des temporären Leistungsangebotes im Stromnetz geregelt werden kann.

2. Batterieproduktionseinrichtung nach dem vorhergehenden Anspruch,
**dadurch gekennzeichnet, dass**
die Batterieproduktionseinrichtung eine Energiespeichereinrichtung (6) umfasst.

3. Batterieproduktionseinrichtung nach dem vorhergehenden Anspruch,
**dadurch gekennzeichnet, dass**
die Energiespeichereinrichtung (6) und die Produktionseinheit (3) durch eine gemeinsame Einrichtung gebildet sind.

4. Batterieproduktionseinrichtung nach einem der vorhergehenden Ansprüche, **dadurch gekennzeichnet, dass** die Batterieproduktionseinrichtung einen Netzauslastungssensor (9) umfasst, der insbesondere eine Netzüberlast und/oder eine Netzunterlast des Stromnetzes (2) erkennen kann.

5. Verfahren zur Regelung einer Batterieproduktionseinrichtung, insbesondere Formierungseinrichtung (1) zur Formierung von Elektrochemischen Zellen (4),
umfassend
eine Produktionseinheit, insbesondere eine Aufnahmeeinrichtung (3) zur Aufnahme zumindest einer Elektrochemischen Zelle (4), insbesondere mehrerer Elektrochemischen Zellen (4),
eine Stromnetzanbindungseinrichtung (5), mittels derer die Batterieproduktionseinrichtung elektrische Energie von einem Stromnetz (2), insbesondere einem öffentlichen Stromnetz, beziehen kann und elektrische Energie an das Stromnetz abgeben kann,
eine Regelungseinrichtung (7) zur Regelung von zumindest Teilen der Batterieproduktion,
**dadurch gekennzeichnet, dass**
ein Angebot an elektrischer Leistung im Stromnetz (2) erfasst wird und anhand des erfassten Leistungsangebotes der Umfang von Energie festgelegt wird, der vom Stromnetz (2) bezogen und/oder an das Stromnetz (2) abgegeben wird.

6. Verfahren nach dem vorhergehenden Anspruch,
**dadurch gekennzeichnet, dass**
das Leistungsangebot im Stromnetz anhand von Messungen der Netzfrequenz ermittelt wird.

7. Verfahren nach einem der Ansprüche 5 bis 6,
**dadurch gekennzeichnet, dass**
das Leistungsangebot im Stromnetz statistisch ermittelt wird.

8. Verfahren nach einem der Ansprüche 5 bis 7,
**dadurch gekennzeichnet, dass**
dass bei Netzunterlast (Dₘᵢₙ) mehr Leistung, insbesondere für die Produktionseinheit und/oder für eine Energiespeichereinrichtung, aus dem Stromnetz entnommen wird als bei Netzüberlast (Dₘₐₓ).

9. Verfahren nach einem der Ansprüche 5 bis 8,
**dadurch gekennzeichnet, dass**
dass bei Netzüberlast (Dₘₐₓ) mehr Leistung, insbesondere für die Produktionseinheit, aus einer Energiespeichereinrichtung entnommen wird als bei Netzunterlast.

10. Verfahren nach einem der Ansprüche 5 bis 9,
**dadurch gekennzeichnet, dass**
dass bei Netzüberlast (Dₘₐₓ) mehr Leistung, insbesondere von der Produktionseinheit und/oder von einer Energiespeichereinrichtung, in das Stromnetz eingeleitet wird als bei Netzunterlast (Dₘᵢₙ).

11. Verfahren nach einem der Ansprüche 5 bis 10,
**dadurch gekennzeichnet, dass**
dass bei Netzunterlast (Dₘᵢₙ) mehr Leistung, insbesondere von Stromnetz und/oder von der Produktionseinheit, in die Energiespeichereinrichtung eingeleitet wird als bei Netzüberlast (Dₘₐₓ).

12. Verfahren nach einem der Ansprüche 5 bis 11,
**dadurch gekennzeichnet, dass**
eine in einem Betriebszustand in der Produktionseinheit bearbeitete Elektrochemische Zelle (4) in einem zeitlich nachfolgenden Betriebszustand als Elektrochemische Zelle (11) einer Energiespeichereinrichtung (6) eingesetzt wird.

## Claims

1. A battery production device, particularly a forming device (1) for forming electrochemical cells (4), comprising
a production unit, particularly a receiving device (3) for receiving at least one electrochemical cell (4), particularly a plurality of electrochemical cells (4),
a power network connecting device (5) by means of which the battery production device can draw electrical energy from a power network (2), particularly a public power network, and can emit electrical energy to the power network,
a regulating device (7) for regulating at least parts of the battery production, **characterized in that**
the regulating device (7) is configured such that the electrical energy drawn from the power network (2) and/or the electrical energy emitted to the power network (2) can be regulated as a function of the supply of power in the power network, particularly as a function of the temporary supply of power in the power network.

2. The battery production device according to the preceding claim,
**characterized in that**
the battery production device comprises an energy storage device (6).

3. The battery production device according to the preceding claim,
**characterized in that**
the energy storage device (6) and the production unit (3) are formed by a common device.

4. The battery production device according to any one of the preceding claims, **characterized in that**
the battery production device comprises a network load sensor (9) which can detect in particular a network overload and/or a network underload in the power network (2).

5. A method for regulating a battery production device, particularly a forming device (1) for forming electrochemical cells (4),
comprising
a production unit, particularly a receiving device (3) for receiving at least one electrochemical cell (4), particularly a plurality of electrochemical cells (4),
a power network connecting device (5) by means of which the battery production device can draw electrical energy from a power network (2), particularly a public power network, and can emit electrical energy to the power network,
a regulating device (7) for regulating at least parts of the battery production, **characterized in that**
a supply of electrical power is detected in the power network (2) and the extent of energy to be drawn from the power network (2) and/or emitted to the power network (2) is determined on the basis of the power supply detected.

6. The method according to the preceding claim,
**characterized in that**
the power supply in the power network is determined on the basis of measurements of the power frequency.

7. The method according to one of claims 5 or 6,
**characterized in that**
the power supply in the power network is determined statistically.

8. The method according to any one of claims 5 to 7,
**characterized in that**
more power, particularly for the production unit and/or for an energy storage device,
is drawn from the power network upon network underload (Dₘᵢₙ) than upon network overload (Dₘₐₓ).

9. The method according to any one of claims 5 to 8,
**characterized in that**
more power, particularly for the production unit, is drawn from an energy storage device upon network overload (Dₘₐₓ), than upon network underload.

10. The method according to any one of claims 5 to 9,
**characterized in that**
more power, particularly from the production unit and/or from an energy storage device, is introduced into the power network upon network overload (Dₘₐₓ), than upon network underload (Dₘᵢₙ).

11. The method according to any one of claims 5 to 10,
**characterized in that**
more power, particularly from the power network and/or the production unit, is introduced into the energy storage device upon network underload (Dₘᵢₙ), than upon network overload (Dₘₐₓ).

12. The method according to any one of claims 5 to 11,
**characterized in that**
an electrochemical cell (4) processed in the production unit during one operating mode is used as an electrochemical cell (11) of an energy storage device (6) in a subsequent operating mode.

## Revendications

1. Dispositif de production de batteries, en particulier dispositif de façonnage (1) servant à façonner des cellules électrochimiques (4), comprenant une unité de production, en particulier un dispositif de réception (3) servant à recevoir au moins une cellule électrochimique (4), en particulier plusieurs cellules électrochimiques (4),
un dispositif de branchement à un réseau d'alimentation en courant (5), au moyen duquel le dispositif de production de batteries peut se fournir en énergie électrique en provenance d'un réseau d'alimentation en courant (2), en particulier en provenance d'un réseau public d'alimentation en courant et peut délivrer au réseau d'alimentation en courant de l'énergie électrique,
un dispositif de régulation (7) servant à réguler au moins des parties de la production de batterie,
**caractérisé en ce**
**que** le dispositif de régulation (7) est réalisé de telle manière que l'énergie électrique fournie par le réseau d'alimentation en courant (2) et/ou l'énergie électrique délivrée au réseau d'alimentation en courant (2) peut être régulée en fonction de l'offre de puissance du réseau d'alimentation en courant,
**qu'**elle peut être en particulier régulée en fonction de l'offre temporaire de puissance du réseau d'alimentation en courant.

2. Dispositif de production de batteries selon la revendication précédente,
**caractérisé en ce**
**que** le dispositif de production de batteries comprend un dispositif accumulateur d'énergie (6).

3. Dispositif de production de batteries selon la revendication précédente,
**caractérisé en ce**
**que** le dispositif accumulateur d'énergie (6) et l'unité de production (3) sont formés par un dispositif commun.

4. Dispositif de production de batteries selon l'une quelconque des revendications précédentes, **caractérisé en ce**
**que** le dispositif de production de batteries comprend un capteur de charge du réseau (9), qui peut identifier en particulier une surcharge de réseau et/ou une charge insuffisante de réseau du réseau d'alimentation en courant (2).

5. Procédé servant à réguler un dispositif de production de batteries, en particulier un dispositif de façonnage (1) servant à façonner des cellules électrochimiques (4),
comprenant
une unité de production, en particulier un dispositif de réception (3) servant à recevoir au moins une cellule électrochimique (4), en particulier plusieurs cellules électrochimiques (4),
un dispositif de branchement à un réseau d'alimentation en courant (5), au moyen duquel le dispositif de production de batteries peut se fournir en énergie électrique en provenance d'un réseau d'alimentation en courant (2), en particulier en provenance d'un réseau public d'alimentation en courant, et peut délivrer de l'énergie électrique au réseau d'alimentation en courant,
un dispositif de régulation (7) servant à réguler au moins des parties de la production de batterie,
**caractérisé en ce**
**qu'**une offre de puissance électrique du réseau d'alimentation en courant (2) est détectée, et en ce qu'on détermine, à l'aide de l'offre de puissance détectée, le volume en énergie, qui est fourni par le réseau d'alimentation en courant (2) et/ou qui est délivré au réseau d'alimentation en courant (2).

6. Procédé selon la revendication précédente, **caractérisé en ce que**
l'offre de puissance du réseau d'alimentation en courant est déterminée à l'aide de mesures de la fréquence de réseau.

7. Procédé selon l'une quelconque des revendications 5 à 6,
**caractérisé en ce**
**que** l'offre de puissance du réseau d'alimentation en courant est déterminée de manière statistique.

8. Procédé selon l'une quelconque des revendications 5 à 7,
**caractérisé en ce**
**qu'**en cas d'une charge insuffisante de réseau (Dₘᵢₙ), on prélève du réseau d'alimentation en courant davantage de puissance, en particulier pour l'unité de production et/ou pour un dispositif accumulateur d'énergie qu'en présence d'une surcharge de réseau (Dₘₐₓ).

9. Procédé selon l'une quelconque des revendications 5 à 8,
**caractérisé en ce**
**qu'**en présence d'une surcharge de réseau (Dₘₐₓ), on prélève d'un dispositif accumulateur d'énergie davantage de puissance, en particulier pour l'unité de production qu'en présence d'une charge insuffisante de réseau.

10. Procédé selon l'une quelconque des revendications 5 à 9,
**caractérisé en ce**
**qu'**en présence d'une surcharge de réseau (Dₘₐₓ), on introduit dans le réseau d'alimentation en courant davantage de puissance, en particulier en provenance de l'unité de production et/ou en provenance d'un dispositif accumulateur d'énergie qu'en présence d'une charge insuffisante de réseau (Dₘᵢₙ).

11. Procédé selon l'une quelconque des revendications 5 à 10,
**caractérisé en ce**
**qu'**en présence d'une charge insuffisante de réseau (Dₘᵢₙ), on introduit dans le dispositif accumulateur d'énergie davantage de puissance, en particulier en provenance du réseau d'alimentation en courant et/ou en provenance de l'unité de production qu'en présence d'une surcharge de réseau (Dₘₐₓ).

12. Procédé selon l'une quelconque des revendications 5 à 11,
**caractérisé en ce**
**qu'**on utilise dans un état de fonctionnement postérieur, comme cellule électrochimique (11) d'un dispositif accumulateur d'énergie (6), une cellule électrochimique (4) traitée dans l'unité de production dans un état de fonctionnement.
